# EUROPÄISCHE PATENTSCHRIFT

(11) **EP 3 341 307 B1**
(45) Veröffentlichungstag und Bekanntmachung des Hinweises auf die Patenterteilung: **19.05.2021**
(21) Anmeldenummer: 16751306.8
(22) Anmeldetag: 16.08.2016
(51) Int. Cl.: B65G 1/04, B65G 1/06, B65G 1/127

(54) **VERFAHREN SOWIE LAGER- UND KOMMISSIONIERSYSTEM ZUM VOLLAUTOMATISIERTEN KOMMISSIONIEREN VON LAGEREINHEITEN**
METHOD, AND STORAGE AND PICKING SYSTEM FOR THE FULLY AUTOMATED PICKING OF STORAGE UNITS
PROCÉDÉ ET SYSTÈME DE STOCKAGE ET DE PRÉPARATION DE COMMANDE POUR LA PRÉPARATION AUTOMATIQUE DE COMMANDES D'UNITÉS DE STOCKAGE

(30) Priorität: 28.08.2015 DE 102015114410
(43) Veröffentlichungstag der Anmeldung: 04.07.2018
(73) Patentinhaber: SSI Schäfer Automation GmbH, 97232 Giebelstadt (DE)
(72) Erfinder: ISSING, Elmar, 97232 Giebelstadt (DE)
(74) Vertreter: Witte, Weller & Partner Patentanwälte mbB
(86) Internationale Anmeldenummer: PCT/EP2016/069376
(87) Internationale Veröffentlichungsnummer: WO 2017/036778

(56) Entgegenhaltungen:
- WO-A1-2005/118436
- WO-A1-2014/089586
- WO-A1-2014/145446
- WO-A1-2015/036503
- CH-A5- 682 482
- DE-A1-102009 017 241
- DE-U1- 8 706 291

## Beschreibung

Die vorliegende Erfindung betrifft ein Lager- und Kommissioniersystem, insbesondere für Case-Pick-Anwendungen, zum vollautomatisierten Kommissionieren von Lagereinheiten. Die vorliegende Erfindung betrifft ferner ein Verfahren zum Kommissionieren von Lagereinheiten in einem Lager- und Kommissioniersystem.

In herkömmlichen Lager- und Kommissioniersystemen werden Güter, die in stationär angeordneten Regalen bevorratet sind, mit Regalbediengeräten (nachfolgend auch kurz als "RBG" bezeichnet) ein- und ausgelagert und an stationär angeordnete Stetigförderer übergeben, um an ihre finale Zielstelle (z.B. Kommissionierstation oder Versand) transportiert zu werden. Die RBG bewegen sich dabei üblicherweise entlang von Längsseiten der Regale innerhalb von Regalgassen. Die Regalgassen liegen zwischen benachbarten Regalen, wobei die Güter stirnseitig zu den Regalen bzw. Regalgassen zwischen den RBG und einer Versorgungsfördertechnik ausgetauscht werden. Die Versorgungsfördertechnik transportiert die ausgelagerten Güter zu Arbeitsstationen, wie z.B. Kommissionierplätzen oder Packplätzen, und/oder zu einem Warenausgang/Versand.

An jeder Schnittstelle, wo die Güter von einem fördertechnischen Element an ein anderes fördertechnisches Element übergeben werden, sind spezifisch für den jeweiligen Zweck eingerichtete Handhabungseinheiten vorgesehen. Es gibt Umsetzer, Weichen, Ausschleuser, Übergabestationen und Ähnliches. Die RBG weisen z.B. ein Lastaufnahmemittel (nachfolgend auch kurz "LAM" genannt) auf, um die Güter (mit oder ohne Ladehilfsmittel) aus einem Lagerplatz (z.B. Regalfach) auszulagern oder dort einzulagern. Die Ein/Auslagerung erfolgt im Wesentlichen in einer horizontalen Richtung. Wenn zum Ein/Auslagern auch vertikale Bewegungen erforderlich sind, ist das LAM üblicherweise auch mit einer Hubfunktion ausgestattet. Das gleiche RBG-LAM kann eingerichtet sein, ein ausgelagertes Gut an eine Fördertechnik (z.B. Rollenförderer, Kettenförderer, Bandförderer oder Ähnliches) abzugeben. An den Schnittstellen erfolgt eine aktive Übergabe, indem die Güter mittels entsprechender Aktuatoren aktiv übergeben werden. Die Schnittstellen stellen neuralgische Punkte im Materialfluss dar, an denen es z.B. oft zu Stauungen kommt. Die Übergabe der Güter zwischen verschiedenen Materialflusselementen erfordert eine aktive Steuerung, die üblicherweise mit einer entsprechenden Sensorik ausgestattet ist, um die Übergabe zu erfassen und zu steuern.

Insbesondere im Bereich des Case-Pickings sind große manuelle oder steuerungstechnische Anstrengungen erforderlich, um die entsprechende logistische Aufgabe zu lösen. So sind z.B. semi-automatische Verfahren bekannt, bei denen eine Person mit einer Auftragspalette durch eine Bereitstellungszone wandert (mäandert), in welcher die zu kommissionierenden Gebinde üblicherweise sortenrein auf Bereitstellungspaletten am Boden bereitgestellt werden. Des Weiteren sind vollautomatische Systeme bekannt (siehe z.B. WO 2007/134841 A1), bei denen die Gebinde unter hohem maschinellen Aufwand von Tablaren herunter kommissioniert werden.

Ein weiterer Nachteil ist darin zu sehen, dass herkömmliche Lager- und Kommissioniersysteme einen relativ geringen Raumnutzungsgrad haben. Ein Verhältnis eines Raums, der von den RBG und fördertechnischen Elementen eingenommen wird, zu einem Raum, der durch die eigentlichen Lagerbereiche in Anspruch genommen wird, ist oft unwirtschaftlich. Dies bedeutet mit anderen Worten, dass verhältnismäßig viel Raum entweder ungenutzt bleibt oder zum Transport der Güter verwendet wird, der dann nicht mehr zum Lagern benutzt werden kann. Noch anders formuliert bedeutet dies, dass die Betreiber der Lager- und Kommissionieranlagen räumlich sehr große Systeme bauen müssen, um ihre logistischen Aufgaben zu lösen, was in merklichen Kosten resultiert. Es wäre wünschenswert, den Raumnutzungsgrad zu verbessern.

Das Dokument DE 87 06 291 U1 betrifft eine Entlade- und ggf. Beladevorrichtung an Lagereinrichtungen. Das Dokument WO 2014/145446 A1 betrifft automatisiertes Einlager- und Auslagersystem einschließlich vertikal umlaufenden Regalen, die mittels fahrerlosen Transportfahrzeugen mit Gütern versorgt werden Das Dokument DE 87 06 291 U1 offenbart ferner ein Lager- und Kommissioniersystem nach dem Oberbegriff des Anspruchs 1.

Daher ist es eine Aufgabe der vorliegenden Erfindung, ein Verfahren und ein Lager- und Kommissioniersystem vorzusehen, welches die oben beschriebenen Nachteile mildert bzw. beseitigt.

Diese Aufgabe wird gelöst durch ein Lager- und Kommissioniersystem nach Anspruch 1.

Dieses System ermöglicht eine Batch-orientierte Kommissionierung. Der Raumnutzungsgrad ist besonders hoch. Es kommt zu einer Entkopplung zwischen dem Lager und dem Transportsystem, insbesondere durch den automatisierten Austausch von Lagereinheiten in der Austauschzone. Sortier- und Sequenzfunktionalität sind insbesondere durch die FTF voll gegeben. Die Lagereinheiten können ohne spezielle Kennzeichnung (z.B. RFID-Tag, Barcode, etc.), insbesondere ohne Tracking, materialflusstechnisch gehandhabt werden, weil insbesondere die FTF als ID-Träger dienen. Das System ist sowohl für Case-Pick- als auch für Piece-Pick-Anwendungen geeignet. Alle Arten von Ladehilfsmitteln können gehandhabt werden, wie z.B. Behälter, Tablare, Kartons, Paletten oder Ähnliches. Die Lagerplätze und die FTF müssen lediglich entsprechend dimensioniert werden.

Aufgrund der kompakten Bauweise und des hohen Raumnutzungsgrads lassen sich insbesondere unterschiedlich temperierte Lagerbereiche (Regalblöcke) leicht realisieren. Tiefkühlbereiche sind einfach zu implementieren, weil die Schnittstellen zur (wärmeren) Umgebung allein durch die Austauschzone(n) definiert ist bzw. sind.

Beim Kommissionieren können die Sequenzierungsanforderungen an den Lagerbereich niedrig gehalten werden, weil das FTS eine entsprechend große Sequenzierungskapazität in Form der einzelnen FTF aufweist.

Die Materialflüsse innerhalb des Systems sind relativ schnell. Dies bedeutet, dass die Lagereinheiten mit hohen Geschwindigkeiten innerhalb des Systems bewegbar sind. Viele Lagereinheiten können auf engstem Raum gleichzeitig bewegt werden, ohne Einbußen bei der Sequenzierung oder Ähnlichem.

Das System der Erfindung ist frei in allen Richtungen skalierbar, indem zusätzliche Regale angebaut werden und/oder zusätzliche FTF hinzugefügt werden.

Vorzugsweise weist das System mehrere der Regalblöcke sowie mindestens eine Regalanordnungsebene auf, wobei die Regalblöcke einer gleichen Regalanordnungsebene abstandsfrei zueinander angeordnet sind und wobei jede der Regalanordnungsebenen an eine FTS-Ebene angrenzt.

Da die Regalblöcke ausschließlich über die Austauschzone mit den Lagereinheiten versorgt werden, ist es nicht erforderlich, zwischen benachbarten Regalblöcken Versorgungsgänge oder sogar Regalgassen vorzusehen. Räume, die üblicherweise von RBG besetzt werden, sind für die Lagerung nutzbar, so dass sich der Raumnutzungsgrad erhöht. Der Begriff "abstandsfrei" ist also so zu verstehen, dass nur wenige bis gar keine Gassen und Gänge zwischen benachbarten Regalblöcken vorhanden sind, so dass die Regalblöcke dicht gepackt relativ zueinander anordenbar sind.

Weiter ist es erfindungsgemäß, dass jeder der beweglichen Lagerplätze einen Lagerplatz-Boden aufweist, der wiederum vorzugsweise Zinken aufweist, und dass jedes der LAM der FTF
so ausgebildet ist, dass die Lagereinheiten, vorzugsweise horizontal, kämmend zwischen den Lagerplatz-Böden und den FTF-LAM austauschbar sind, indem die FTF die beweglichen Lagerplatz-Böden innerhalb der Austauschzone durchfahren.

Auf eine Aktuatorik und Sensorik, die üblicherweise für den Austausch eingesetzt wird, kann hier verzichtet werden.

Bei einer weiteren besonderen Ausgestaltung umfassen die Regale ein vertikales oder horizontal umlaufendes Regal.

In diesem Fall sind alle Lagerplätze beweglich gelagert und insbesondere simultan bewegbar.

Gemäß einer bevorzugten Ausführungsform umfasst der Regalblock einen Lagerlift, der mindestens ein Regal und eine Hubbalkeneinrichtung umfasst, die dem mindestens einen Regal zugeordnet ist, wobei ein LAM der Hubbalkeneinrichtung eingerichtet ist, die beweglichen Lagerplätze in das mindestens eine Regal ein/auszulagern oder ausgelagerte beweglichen Lagerplätze in die Austauschzone zu bewegen, um dort die Lagereinheiten an die FTF abzugeben oder von den FTF aufzunehmen.

In diesem Fall sind ausgewählte Lagerplätze bewegbar. Die Relativpositionierung der Lagerplätze zueinander kann geändert werden.

Auch ist es bevorzugt, wenn das vertikal bzw. horizontal umlaufende Regal und/oder der Lagerlift mehrere Regalböden aufweisen, wobei jeder der Regalböden jeweils eine Vielzahl von den beweglichen Lagerplätzen umfasst, die horizontal benachbart zueinander angeordnet und starr miteinander verbunden sind.

Ferner wird die oben genannten Aufgabe durch ein Verfahren nach Anspruch 6 gelöst.

Vorzugsweise erfolgt das Analysieren der Kommissionieraufträge Batch-orientiert.

Insbesondere weist das Verfahren ferner die Schritte auf: Analysieren von Wareneingangsaufträgen; Bestimmen von potenziellen Einlagerungsplätzen, die unbelegte bewegliche Lagerplätze darstellen, wobei die Analyse der Wareneingangsaufträge vorzugsweise Kennzahlen-orientiert erfolgt; Erzeugen von entsprechenden Bewegungsbefehlen für die unbelegten beweglichen Lagerplätze und die FTF; und Abholen von Wareneingangs-Lagereinheiten durch die FTF.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein stark vereinfachtes Blockdiagramm eines Systems der vorliegenden Erfindung;
- Fig. 2: ein Strukturdiagramm des Systems der Erfindung;
- Fig. 3: eine perspektivische Teilansicht einer ersten Ausführungsform des Systems, wobei ein vertikal umlaufendes Regal isoliert dargestellt ist;
- Fig. 4: eine perspektivische Ansicht eines mehrschichtigen Systems;
- Fig. 5: eine perspektivische Teilansicht einer zweiten Ausführungsform des Systems, wobei ein Lagerlift isoliert dargestellt ist;
- Fig. 6: eine perspektivische Teilansicht einer dritten Ausführungsform des Systems, wobei ein horizontal umlaufendes Regal isoliert dargestellt ist;
- Fig. 7: ein Strukturdiagramm einer Regalanordnung; und
- Fig. 8: ein Flussdiagramm eines Verfahrens der Erfindung.

Wenn im Nachfolgenden von vertikalen und horizontalen Orientierungen gesprochen wird, versteht es sich von selbst, dass die Orientierungen jederzeit durch eine Drehung miteinander vertauscht werden können und deshalb nicht einschränkend zu verstehen sind. In der nachfolgenden Beschreibung der Figuren hat man sich bei der Wahl der Orientierung des Koordinatensystems generell an die in der Intralogistik üblichen Bezeichnungen gehalten, so dass die Längsrichtung von Regalen 36 mit X, die Tiefe (bzw. die Querrichtung) mit Z und die (vertikale) Höhe des Regals 22 mit Y bezeichnet ist. Des Weiteren wurden gleiche Teile und Merkmale mit gleichen Bezugszeichen versehen. Die in der Beschreibung enthaltenen Offenbarungen sind sinngemäß auf ähnliche Teile und Merkmale mit ähnlichen Bezugszeichen übertragbar. Lage- und Orientierungsangaben (z.B. "oben", "unten", "seitlich", "längs", "quer", "horizontal", "vertikal" und Ähnliches) sind auf die unmittelbar beschriebene Figur bezogen. Bei einer Änderung der Lage oder Orientierung sind diese Angaben aber sinngemäß auf die neue Lage bzw. Orientierung zu übertragen.

Eine "Regalanordnung 12" (z.B. ein Regallager) umfasst eine Vielzahl von Regalen 36. Zwischen den Regalen 36 sind vorzugsweise gar keine Regalgassen definiert, die herkömmlicherweise als Aktionsraum für die RBG dienen. Die Regale 36 enden an ihren, sich jeweils gegenüberliegenden Stirnseiten, die in einer Ebene (YZ) senkrecht zur Längsrichtung X der Regale 36 orientiert sind. Die Regale 36 selbst weisen eine Vielzahl von (Regal-)Lagerplätzen 20 auf, die insbesondere in übereinanderliegenden Regalebenen angeordnet sind. Eine Regalspalte erstreckt sich in einer vertikalen Richtung innerhalb eines Regals 36 und weist üblicherweise so viele Lagerplätze übereinander auf, wie Regalebenen vorhanden sind. Die Regale 36 selbst weisen eine Vielzahl von (Regal-)Lagerplätzen 20 bzw. Stellplätzen auf, die normalerweise matrixförmige in den übereinanderliegenden Regalebenen angeordnet sind. Eine Teilung der Lagerplätze 20 in einer horizontalen Richtung und eine Teilung der Regalebenen in einer vertikalen Richtung sind üblicherweise für alle Regale 36 gleich. Abweichungen sind natürlich möglich.

Unter einem "RBG" wird hier ein Förderzeug bzw. Bediengerät verstanden, das üblicherweise in einer Regalgasse zwischen zwei parallelen Regalen 36, meist schienengeführt, verfahrbar ist. Typischerweise weist ein RBG ein Fahrwerk, ein oder mehrere Masken, ein Hubwerk sowie mindestens ein Lastaufnahmemittel auf. Der Mast kann an einer oberen Führungsschiene geführt und/oder am Boden mit einer Traverse verbunden sein, welche die Kräfte über Stütz- und Führungsrollen übertragen. Antriebe werden oft als Reibantriebe oder Zahnriemenantriebe ausgeführt. Ein Hubantrieb des RBG erfolgt häufig mittels umlaufender Zugmittel, wie z.B. Zahnriemen, Ketten oder Seilen. Eine Lastaufnahme erfolgt z.B. bei Paletten über eine teleskopierbare Gabel und bei Behältern durch Zugeinrichtungen oder mittels eines Hubtischs.

Unter einer "Lagereinheit 70" wird nachfolgend eine Handhabungseinheit verstanden, die im System 10 eingesetzt wird. Eine Lagereinheit 70 ist typischerweise artikelrein, kann aber auch gemischt sein. Die Lagereinheit 70 kann ein Lagerhilfsmittel sowie das Lagergut selbst umfassen. Die Lagereinheit 70 kann aber auch allein das Lagergut sein, wenn das Lagerhilfsmittel weggelassen wird. Als Lagerhilfsmittel werden üblicherweise Ladehilfsmittel eingesetzt, wie z.B. Paletten, Gitterboxen, Container, Behälter, Kartons, Tablare und Ähnliches. Lagergüter umfassen Stückgüter, Schüttgüter, Flüssigkeiten oder Gase. Schüttgüter, Flüssigkeiten und Gase benötigen zur weiteren Handhabung Packmittel, um Packstücke zu definieren. Im Nachfolgenden werden exemplarisch Verpackungseinheiten (VPE) als Lagereinheiten betrachtet werden, insbesondere ohne Lagerladehilfsmittel.

Ein "Artikel" ist eine durch einen Artikeltyp unterscheidbare (kleinste) Einheit eines Artikelsortiments. Artikel können durch Stückgüter repräsentiert werden. Stückgüter sind individualisierte, unterscheidbare Güter, die einzeln gehandhabt werden können und deren Bestand stückweise oder als Gebinde (Case) geführt wird. Das Gebinde ist ein weiteres Beispiel für eine handhabbare Lagereinheit 70, die grundsätzlich manuell oder mittels technischem Gerät (z.B. Fördertechnik oder Lastaufnahmemittel) bewegt werden kann. Die Begriffe "Artikel", "Gebinde", "Stückgüter", "Verpackungseinheit" und "Lagereinheit" werden hier äquivalent verwendet.

Ein (Kommissionier-)"Auftrag" besteht aus einer oder mehreren Auftragspositionen, die auch als Auftragszeilen bezeichnet werden. Eine Auftragszeile gibt eine jeweilige Menge (Stückzahl) eines Artikeltyps (Lagereinheit) an, den ein Kunde bestellt hat. Der "Kommissionierauftrag" liegt üblicherweise als Datensatz vor, der bearbeitet werden kann. Der Kommissionierauftrag kann ein Kopffeld, ein Prioritätsfeld und/oder ein Artikelfeld aufweisen. Das Kopffeld kann u.a. Informationen zum Kunden, der eine Bestellung aufgegeben hat, zur (Kunden-)Adresse oder einen Kunden-Identifikationsnummer sowie eine Bestell-/Auftragsnummer aufweisen. Das Prioritätsfeld enthält Angaben darüber, ob es sich um einen normalen Auftrag oder einen Eilauftrag handelt. Ein Eilauftrag ist ein Auftrag mit hoher (Bearbeitungs-)Priorität, der üblicherweise vorrangig von normalen Aufträgen behandelt wird.

Eine "Batch" ist eine Zusammenfassung mehrerer (Kommissionier-)Aufträge zu einem Verarbeitungslos. Eine "Batch" ist also eine Zusammenfassung von mehreren (Kommissionier-)Aufträgen zu einer geordneten Menge oder Liste von Aufträgen. Im Batch-Betrieb werden Aufträge zunächst gesammelt und sortiert, um dann sequenziell in einem Schub, d.h. in einer "Batch" verarbeitet zu werden.

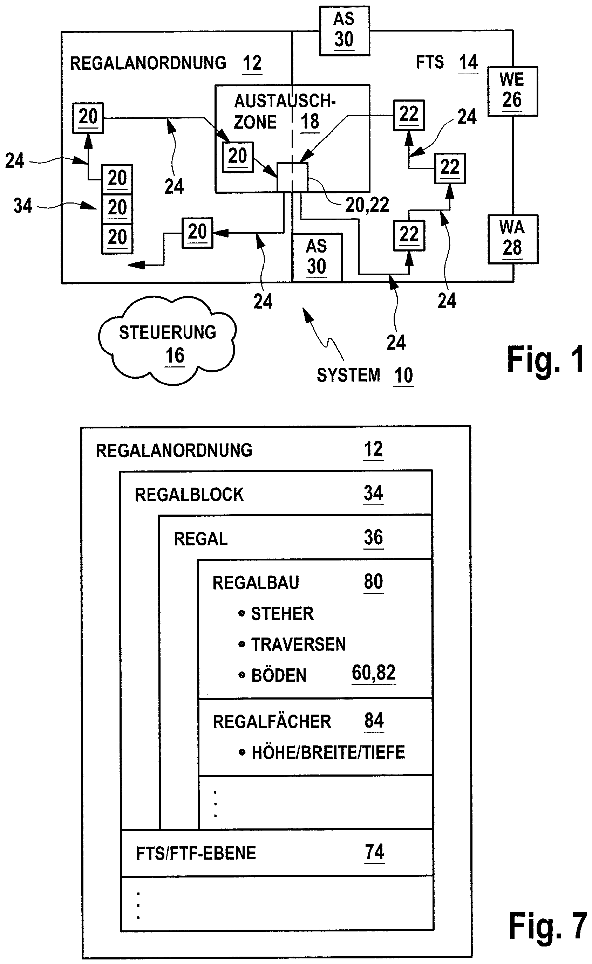

Fig. 1 zeigt ein Blockdiagramm eines Lager- und Kommissioniersystems 10, das z.B. als Distributionsanlage eines Einzelhändlers oder eines Online-Händlers verwendet werden kann. Das Lager-Kommissioniersystem 10 wird nachfolgend auch kurz als das "System 10" bezeichnet werden.

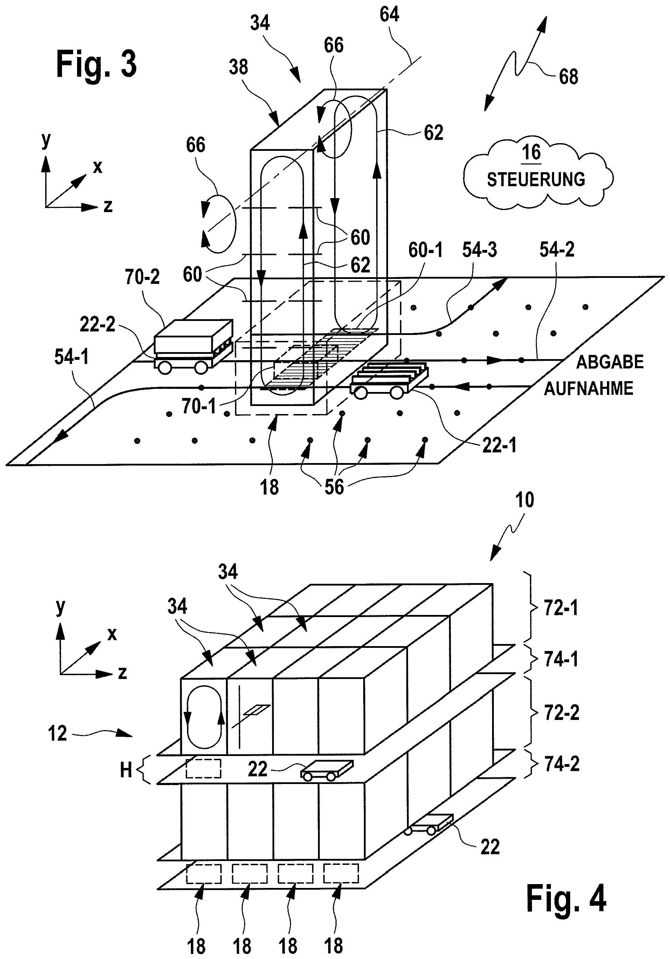

Das System 10 weist eine Regalanordnung 12 auf, die unter Bezugnahme auf Fig. 7 noch näher erläutert werden wird. Das System 10 weist ferner ein fahrerloses Transportsystem (FTS) 14 auf. Außerdem weist das System 10 eine Steuerung 16 auf. Zwischen der Regalanordnung 12 und dem FTS 14 ist überlappend eine Austauschzone 18 vorgesehen. Bewegliche Lagerplätze 20 und autonom verfahrbare fahrerlose Transportfahrzeuge (FTF) 22 können von der Steuerung 16 in die Austauschzone 18 hinein und aus der Austauschzone 18 heraus bewegt werden, um innerhalb der Austauschzone 18 hier nicht näher dargestellte Lagereinheiten 70 (siehe z.B. Fig. 4) miteinander auszutauschen. Entsprechende Bewegungen sind in der Fig. 1 durch Pfeile 24 angedeutet.

Das System 10 kann ferner einen Wareneingang (WE) 26 sowie einen Warenausgang (WA) 28 aufweisen. Ferner kann das System 10 ein oder mehrere Arbeitsstationen (AS) 30 aufweisen, wie z.B. Kommissionierarbeitsplätze oder Packstationen.

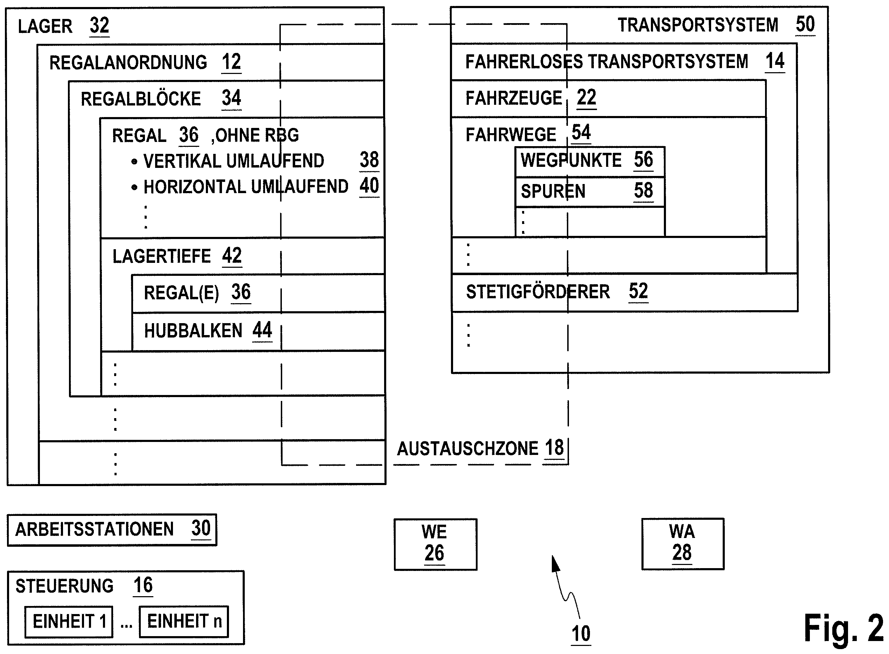

Eine Koordinierung der Abarbeitung von Aufträgen übernimmt ein Auftragsabwicklungssystem, das meist in eine Kommissioniersteuerung integriert ist, die z.B. auch ein Warenwirtschaftssystem aufweisen kann. Die Kommissioniersteuerung kann Teil der Steuerung 16 sein und kann ferner eine Lagerplatzverwaltung sowie eine Informationsanzeige integriert haben. Die Kommissioniersteuerung wird üblicherweise durch eine Datenverarbeitungsanlage realisiert, die vorzugsweise für eine verzögerungsfreie Datenübertragung und Datenverarbeitung im Online-Betrieb arbeitet. Die Steuerung 16 kann durch eine oder mehrere Steuereinheiten implementiert sein, wie es in der Fig. 2 angedeutet ist, die nachfolgend noch näher beschrieben wird. Die Steuerung 16 der Erfindung kann die oben beschriebene Kommissioniersteuerung umfassen. Die Steuerung 16 kann zentral und/oder dezentral organisiert sein.

Fig. 2 zeigt das Strukturdiagramm des Systems 10, das das System 10 der Fig. 1 detaillierter darstellt.

Die Regalanordnung 12 ist Teil eines Lagers bzw. Lagerbereichs 32. Die Regalanordnung 12 weist eine oder mehrere Regalblöcke 34 auf, die exemplarisch auch in der Fig. 4 näher gezeigt sind. Jeder der Regalblöcke 34 stellt eine in sich geschlossene Funktionseinheit dar. Es gibt verschiedene Typen von Regalblöcken 34.

Einer der Typen wird durch ein Regal 36 dargestellt, das ohne RBG zum Ein/Auslagern der Lagereinheiten 70 betrieben wird. Es kann sich dabei entweder um ein vertikal umlaufendes Regal 38 oder ein horizontal umlaufendes Regal 40 handeln. Die umlaufenden Regale 38 und 40 zeichnen sich dadurch aus, dass ihre Lagerplätze 20 beweglich gegenüber einem restlichen Regalbau 80 (siehe Fig. 7) ausgebildet sind, in dem die hier nicht näher gezeigten Regalböden 60 (siehe z.B. Fig. 3) an einem hier nicht näher bezeichneten Zugmittel 62 (z.B. Seil, Kette, etc.), vorzugsweise kardanisch, angebracht sind, wobei das Zugmittel 62 vorzugsweise in sich geschlossen ist und entweder um vertikale Achsen oder um horizontale Achsen endlos umläuft, um die Regalböden 60 in Bezug auf den räumlich stationären Regalbau 80 zu bewegen.

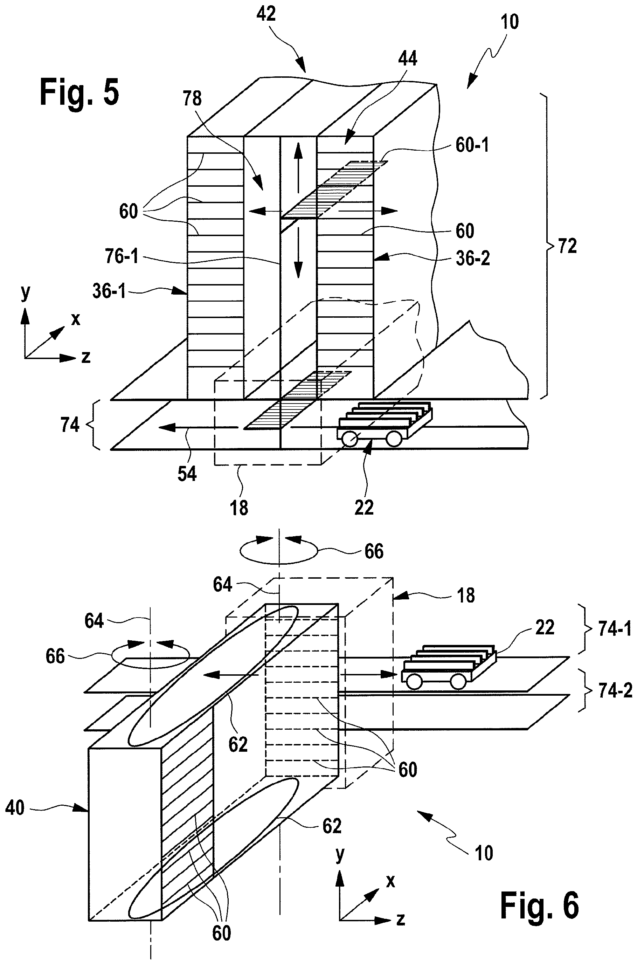

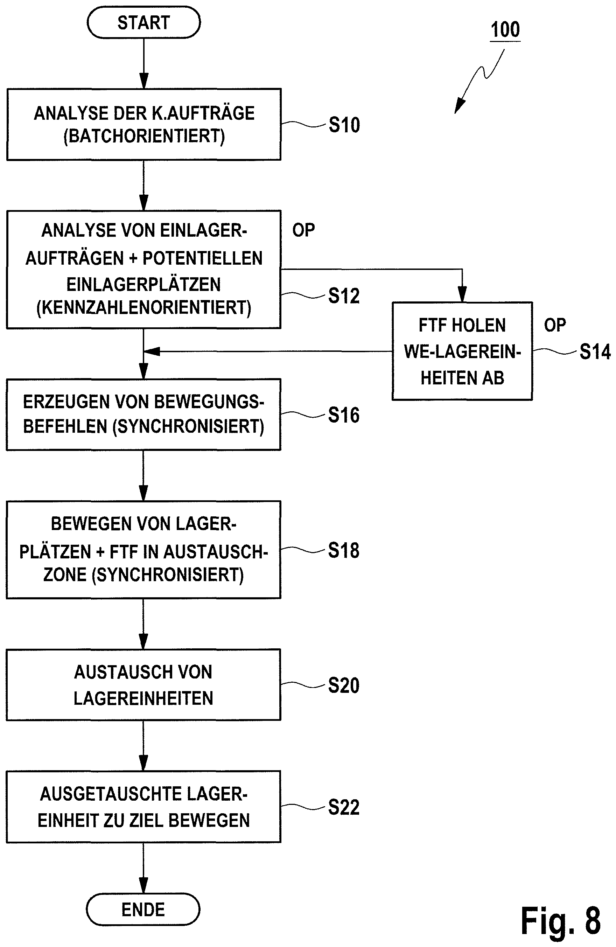

Ein weiterer Regalblocktyp wird durch einen Lagerlift 42 dargestellt. Ein Lagerlift 42 weist ein oder mehrere räumlich stationäre Regale 36 auf, denen eine Hubbalkeneinrichtung 44 zugeordnet ist, die die Regalböden 60 aus dem Regal 36 (horizontal) ausheben und anschließend vertikal auf eine Handhabungsebene verbringen können. Ein exemplarischer Lagerlift 42 ist in dem Dokument WO 2015/090369 A1 (siehe Fig. 8) gezeigt und näher beschrieben. Der Lagerlift 42 ist eine schrankförmige Lagerregalvorrichtung, die üblicherweise zwei benachbarte und beabstandet zueinander angeordnete Regale 36 aufweist, zwischen denen die Hubbalkeneinrichtung 44 mit ihrem LAM 78 (vgl. Fig. 5) vertikal verfahrbar ist, welches eingerichtet ist, die Regalböden 60 in die Regale 36 ein/auszulagern. In diesem Fall weisen die Regale 36 üblicherweise eine Vielzahl von seitlich angeordneten Auflagewinkeln auf, die nach einem vorgegebenen Rastermaß (Teilung) in der vertikalen Y-Richtung zueinander beabstandet sind, um die Regalböden 60 schubladenartig aufzunehmen. Es gibt Lagerlifttypen, die zusätzlich eine Bedienöffnung aufweisen, um die Regalböden 60 (manuell) mit Lagereinheiten zu bestücken oder Lagereinheiten zu entnehmen. Zurückkehrend zur Fig. 2 kann das FTS 14 Teil eines Transportsystems 50 sein. Das FTS 14 weist eine Vielzahl der autonom verfahrbaren Fahrzeuge bzw. FTF 22 auf, die sich entlang von Fahrwegen 54 bewegen. Die Fahrwege 54 können durch, vorzugsweise rasterförmig angeordnete, Wegpunkte 56 und/oder Spuren bzw. Bahnen 58 und Ähnliches implementiert sein. Das Transportsystem 50 kann ferner Stetigförderer 52 aufweisen, wie z.B. Rollenförderer, Kettenförderer, Vertikalförderer, Bandförderer oder Ähnliches.

Die Steuerung 16 kommuniziert mit der Regalanordnung 12, um die beweglichen Lagerplätze 20 in die Austauschzone 18 (vergleiche Fig. 1) hinein zu bewegen und aus der Austauschzone 18 heraus zu bewegen. Die Steuerung 16 kommuniziert auch mit den FTS 14, um die FTF 22 in die Austauschzone 18 hinein zu bewegen und aus der Austauschzone 18 herauszubewegen. Die Kommunikation kann drahtlos und/oder verkabelt erfolgen. Die Kommunikation erfolgt derart, dass sich die beweglichen Lagerplätze 20 und die FTF 22 in der Austauschzone 18 treffen. Vorgegebene bewegliche Lagerplätze 20 werden so bewegt, dass sie zu einem vorgegebenen Zeitpunkt, d.h. synchronisiert, mit den entsprechend zugeordneten FTF 20 zusammentreffen, um ein oder mehrere Lagereinheiten 70 auszutauschen. Der Austausch kann in beiden Richtungen erfolgen (Ein/Auslagerung). Entweder nimmt das vorgegebene FTF 22 die Lagereinheit 70 vom beweglichen Lagerplatz 20 auf oder es gibt die Lagereinheit 70 an den beweglichen Lagerplatz 20, der sich zum Zeitpunkt der Übergabe vorzugsweise in Ruhe befindet, in der Austauschzone 18 ab.

Fig. 3 zeigt eine perspektivische Teilansicht einer ersten Ausführungsform des Systems 10, bei der vertikal umlaufende Regale 38 eingesetzt werden, die vorzugsweise abstandsfrei zueinander angeordnet sind und von denen in der Fig. 3 exemplarisch ein einzelnes vertikal umlaufendes Regal 38 verdeutlicht ist. Das vertikal umlaufende Regal 38 weist eine Vielzahl der Regalböden 60 (bewegliche Lagerplätze 20) auf, von denen lediglich ein unterster Regalboden 60-1 detailliert gezeigt ist. Die Regalböden 60 sind schwenkbar an den Zugmitteln 62 (z.B. Kette) gelagert, die vorzugsweise im Bereich der Stirnseiten des vertikal umlaufenden Regals 38 angeordnet sind. Die Zugmittel 62 sind um horizontale Achsen 64 mittels nicht näher gezeigten Antrieben drehbar, wie es durch Pfeile 66 angedeutet ist. Die Steuerung 16 kommuniziert beispielsweise drahtlos (siehe Pfeil 68) mit den Antrieben des vertikal umlaufenden Regals 38, um einen gewünschten (durch die Steuerung 16 vorgegebenen) Regalboden 60, z.B. den Regalboden 60-1, in eine unterste Stellung zu bringen, wo sich die Austauschzone 18 befindet, um Lagereinheiten 70 mit dem oder den FTF 22 auszutauschen.

In der Fig. 3 sind exemplarisch zwei FTF 22-1 und 22-2 gezeigt. Das FTF 22-1 fährt entlang eines ersten Fahrwegs 54-1 von rechts nach links in der negativen Z-Richtung durch die Aktionszone 18, um die Lagereinheit 70-1 vom Regalboden 60-1 aufzunehmen. Das FTF 22-2 fährt von links nach rechts in der positiven Z-Richtung durch die Aktionszone 18, um die Lagereinheit 70-2 an den Regalboden 60-1 abzugeben. Der Regalboden 60-1 umfasst exemplarisch drei hier nicht näher bezeichnete bewegliche Lagerplätze 22, die in der X-Richtung benachbart bzw. nebeneinander angeordnet sind. Es versteht sich, dass allgemein jeder der Regalböden 60 mehr oder weniger bewegliche Lagerplätze 20 aufweisen kann. Generell gilt, dass jeder der Lagerplätze 20 einen hier nicht näher gezeigten und bezeichneten, z.B. zinkenförmigen, Lagerplatzboden 82 (vgl. Fig. 7) aufweist.

Die Regalböden 60 bzw. die Lagerplatzböden 82 sind vorzugsweise zinkenförmig ausgebildet, wie es in der parallel eingereichten Anmeldung mit dem Titel "fahrerloses Transportsystem in einer Lager- und Kommissionieranlage" (DE 10 2015 114 370.4) offenbart ist, die am gleichen Tag wie die vorliegende Anmeldung vom gleichen Anmelder eingereicht wurde und auf die Bezug genommen wird. Die FTF 22 weisen dann vorzugsweise Stützleisten auf, wie sie in diesem Dokument beschrieben sind, um die Lagereinheiten 70 passiv, d.h. ohne zusätzliche Aktuatoren, austauschen zu können. Die LAM der FTF 22 und die Regalböden 60 bzw. die Lagerplatzböden 82 tauschen die Lagereinheiten 70 vorzugsweise horizontal kämmend miteinander aus, wie es in diesem Dokument beschrieben ist. Die Regalböden 60 stellen vorzugsweise "Übergabestationen" dar, wie sie in diesem Dokument beschrieben sind. Die in diesem Dokument offenbarten Rampen/Gruben-Anordnungen, die in der Fig. 3 nicht gezeigt sind, können hier ebenfalls allgemein zum Einsatz kommen, und zwar bei allen Ausführungsformen des Systems 10. Wenn die in diesem Dokument beschriebene Austauschmethodik verwendet wird, reicht es aus, wenn die FTF 22 in der einen oder in der entgegengesetzten anderen Richtung durch die Regalböden 60 innerhalb der Austauschzone 18 hindurchfahren, um die Lagereinheiten 70 abzugeben oder aufzunehmen. Dabei können die Regalböden 60 bzw. die Lagerplatzböden 82 gegenüber der Horizontalen leicht geneigt sein, wie es ebenfalls in diesem Dokument beschrieben ist.

Es versteht sich, dass der Austausch der Lagereinheiten 70 auch auf einer anderen Art und Weise erfolgen kann. Beispielsweise könnten die FTF 22 auch vor- und zurückfharen, um einen Austausch zu vollziehen, wie z.B. in der DE 10 2015 114 393 beschrieben. Vorzugsweise sollte der Austausch jedoch generell passiv erfolgen, d.h. ohne den Einsatz zusätzlicher Aktuatoren wie z.B. Hub- und/oder Greifmechanismen.

Ferner versteht es sich, dass die Zugmittel 62 nicht vollumfänglich mit den Regalböden 60 bestückt sein müssen. Es kann von Vorteil sein, den einen oder anderen Regalboden 60 wegzulassen, der in der Fig. 3 gezeigt ist, um Freiräume unterhalb der vielen, hier nicht gezeigten Regalblöcke 34 zu erhalten (vgl. Fig. 4), damit sich die FTF 22 frei unter den Regalblöcken 34 bewegen können.

Fig. 4 dient der Verdeutlichung eines Gesamteindrucks der Regalanordnung 12, und zwar unabhängig vom Typ des verwendeten Regalblocks 34. Die Fig. 4 zeigt eine perspektivische Ansicht einer mehrschichtigen Regalanordnung 12, die zwei vertikal übereinander angeordnete Regalanordnungsebenen 72-1 und 72-2 aufweist. Zwischen den Regalanordnungsebenen 72, von denen jede hier exemplarisch aus zwölf Regalblöcken 34 besteht, die insbesondere abstandsfrei zueinander angeordnet sind, ist eine erste FTS-Ebene 74-1 angeordnet. In der FTS-Ebene 74-1 können die FTF 22 entlang beliebig wählbaren Fahrwegen 54 (nicht dargestellt) unter den Regalblöcken 34 der jeweiligen Regalanordnungsebene 72-1 bzw. 72-2 fahren bzw. bewegt werden. Unterhalb jedes Regalblocks 34 ist jeweils eine Austauschzone 18 mit einer Strichlinie angedeutet. Es versteht sich, dass die Austauschzonen 18 ergänzend und/oder alternativ auch oberhalb oder auf einer sonstigen beliebigen Höhe des Regalblocks 34 angeordnet sein können. Eine Höhe H der FTS-Ebenen 74 ist so gewählt, dass die FTF 22 die höchsten Lagereinheiten 70, die in den jeweiligen Regalblöcken 34 der jeweiligen Regalanordnungsebene 72 gelagert sind, unterhalb dieser Regalblöcke 34 hindurch transportieren können.

Aus den Fig. 3 und 4 wird deutlich, dass der Raumnutzungsgrad im Vergleich zu herkömmlichen Lager- und Kommissioniersystem sehr hoch ist, weil auf die Regalgassen zwischen den Regalen 36 verzichtet werden kann, die üblicherweise von den RBG benutzt werden. Des Weiteren ist ersichtlich, dass viel weniger Komponenten benötigt werden, um die Lagereinheiten 70 ein- oder auszulagern. Eine Kommissionierung kann vollautomatisch erfolgen, indem die FTF 22 synchronisiert zu den beweglichen Lagerplätzen 20 hin bewegt werden. Die FTF 22 können die ausgelagerten Lagereinheiten 70, die sie von einem der Regalblöcke 34 abgeholt haben, zu hier nicht näher gezeigten Kommissionierstationen verbringen (vergleiche Fig. 1), die außerhalb der Regalanordnung 12 liegen. Die Aus- und Einlagerung der Lagereinheiten 70 erfolgt dabei vollautomatisch. Es versteht sich, dass dieses vollautomatische System um manuell betriebene Komponenten ergänzt werden kann. Jedoch ermöglicht das System 10 eine vollautomatisierte Kommissionierung, insbesondere bei Case-Pick-Anwendungen. Die Erfindung ist aber auch bei Piece-Pick-Anwendungen einsetzbar, indem die FTF 22 z.B. Lagerbehälter (hier nicht näher bezeichnet und gezeigt) zwischen der Regalanordnung 12 und den Arbeitsstationen 30 (vergleiche Fig. 1) transportieren.

Fig. 5 zeigt eine perspektivische Teilansicht einer zweiten Ausführungsform des Systems 10, die ähnlich zur ersten Ausführungsform der Fig. 3 aufgebaut ist, wobei das vertikal umlaufende Regal 38 gegen einen Lagerlift 42 ausgetauscht ist. Es versteht sich, dass in der Fig. 1 exemplarisch lediglich ein einziger Lagerlift 42 bezeigt ist. Die zweite Ausführungsform kann beliebig viele Lagerlifte 42 in der Regalanordnungsebene 72 aufweisen, wie bei der ersten Ausführungsform ist unterhalb der Regalblöcke 34 eine FTS-Ebene 74 vorgesehen, in der die FTF 22 entlang frei wählbaren Fahrwegen 54 verfahrbar sind. Generell können verschiedene Regalblocktypen simultan in System 10 eingesetzt werden.

Der in der Fig. 5 gezeigte Lagerlift 42 weist ein erstes Regal 36-1 und ein zweites Regal 36-2 auf, zwischen denen die Hubbalkeneinrichtung 44 angeordnet ist. Die Hubbalkeneinrichtung 44 weist stirnseitig angeordnete Masten 76 auf, von denen in der Fig. 1 lediglich ein Mast 76-1 gezeigt ist. Die Hubeinrichtung 44 weist ferner ein Lastaufnahmemittel 78 auf, das eingerichtet ist, Regalböden 60 horizontal (in der Z-Richtung) ein/auszulagern und vertikal (in der Y-Richtung) nach unten in die Austauschzone 18 zu bringen, wo der Austausch von (hier nicht dargestellten) Lagereinheiten 70 mit den FTF 22 erfolgen kann. In der Fig. 5 hat das LAM 78 den Regalboden 60-1 gegriffen, um ihn in die Austauschzone 18 zu verbringen.

Fig. 6 zeigt eine perspektivische Teilansicht einer dritten Ausführungsform des Systems 10, das ähnlich zu den ersten und zweiten Ausführungsformen der Fig. 3 und 5 aufgebaut ist, wobei der oder die Regalblöcke 34 durch ein oder mehrere horizontal umlaufende Regale 40 implementiert sind. In der Fig. 6 ist exemplarisch ein horizontal umlaufendes Regal 40 gezeigt. Die Zugmittel 62 des Regals 40 laufen in der horizontalen XZ-Ebene endlos um, auf denen die Drehachsen 64 senkrecht stehen (vergleiche Pfeile 66).

Die Austauschzone 18 ist stirnseitig zum Regal 40 angeordnet und erstreckt sich im Wesentlichen in der vertikalen Y-Richtung. Die FTF 20 sind in FTS-Ebenen 74 verfahrbar, die sich entlang der Stirnseiten der Regale 40 erstrecken. Vorzugsweise sind so viele FTS-Ebenen 74 vorgesehen, wie Regalböden 60 in der vertikalen Y-Richtung übereinander vorgesehen sind. In der Fig. 6 sind exemplarisch lediglich zwei der FTS-Ebenen 74-1 und 74-2 gezeigt.

Die drei Ausführungsformen der Fig. 3, 5 und 6 verdeutlichen das grundlegende Prinzip, wonach die beweglichen Lagerplätze 20 in die Austauschzone 18 verbracht werden, um dort mit den FTF 22 die Lagereinheiten 70 auszutauschen. Diese Vorgänge werden durch die Steuerung 16 geplant, koordiniert und synchronisiert.

Fig. 7 zeigt ein Strukturdiagramm der Regalanordnung 12. Die Regalanordnung 12 weist mindestens einen Regalblock 34 auf. Es gibt verschiedene Regalblocktypen. Die Regalanordnung 12 weist ferner die FTS- bzw. FTF-Ebene 74 auf. Die Regalblöcke 34 können in Regalanordnungsebenen 72 (vergleiche Fig. 4) angeordnet sein. Die Regale 36 weisen einen statischen, d.h. räumlich stationär angeordneten, Regalbau 80 auf. Der Regalbau 80 kann (vertikale) Steher, (horizontale) Traversen sowie die oben erwähnten (Lagerplatz-)Böden 82 aufweisen. Die Regalfächer 84 sind durch ihre Höhe, Breite und Tiefe definiert und stellen einen geometrischen Raum dar, in welchem die Lagereinheiten 70 innerhalb des Regals 36 bevorratet werden.

Es versteht sich, dass die FTS-Ebenen 74 über FTF-Vertikalförderer (nicht dargestellt) miteinander verbunden sein können. Die Steuerung 16 ist vorzugsweise dazu eingerichtet, die Fahrwege 54 bzw. Routen für die FTF 22 zu planen (Navigation). Ferner kann die Steuerung 16 dazu eingerichtet sein, den Verkehr der FTF 22 z.B. zur Kollisionsvermeidung zu regeln.

Fig. 8 zeigt ein Flussdiagramm eines Verfahrens 100 zum Kommissionieren der Lagereinheiten 70 in dem Lager- und Kommissioniersystem 10, das eine Vielzahl der beweglichen Lagerplätzen 20 und eine Vielzahl der FTF 22 aufweist, wobei die beweglichen Lagerplätze 20 und die FTF 22 eingerichtet sind, die Lagereinheiten 70, vorzugsweise passiv, untereinander auszutauschen und wobei das System 10 vorzugsweise gemäß einer der drei oben erläuterten Ausführungsformen ausgebildet ist.

In einem ersten Schritt S10 werden die Kommissionieraufträge analysiert. Die Analyse kann Batch-orientiert erfolgen. Dies bedeutet, dass solche Kommissionieraufträge, die einen gleichen Artikeltyp beinhalten, zu einem Los zusammengefasst werden. Ergänzend oder alternativ können verschiedene Kommissionieraufträge, unabhängig von ihren Artikeltypen, gruppiert werden, indem die Lagereinheiten 70 berücksichtigt werden, die auf ein und demselben Regalboden 60 (vergleiche z.B. Fig. 3) bevorratet sind. In diesem Fall werden die Kommissionieraufträge also nicht nach einheitlichen Artikeltypen gruppiert, sondern danach, welche Lagereinheiten 70 sich gleichzeitig innerhalb der Austauschzone 18 befinden, um die Bewegungen 24 der beweglichen Lagerplätze 20 (vergleiche Regalboden 60-1 in Fig. 3 oder in Fig. 5) zu reduzieren.

Die Analyse des Schritts S10 wird durch die Steuerung 16 durchgeführt. Während des Schritts S10 kann auch eine Wegoptimierung für die FTF 20 berücksichtigt werden. Dies bedeutet, dass die Wege der FTF 22, aber auch die der beweglichen Lagerplätze 20, möglichst kurz gehalten werden. Da das FTS 14 üblicherweise eine sehr große Anzahl von FTF 22 umfasst und da die Lagereinheiten 70 hinsichtlich ihres Typs üblicherweise mehrfach verteilt in der Regalanordnung 12 vorkommen, besteht hier Optimierungspotenzial.

Die nachfolgend erläuterten Schritte S12 und S14 sind optional. Im Schritt S12 können Einlagerungsaufträge bzw. Wareneingangsaufträge zum Zwecke eines Nachschubs für die Regalanordnung 12 analysiert werden. Dabei werden alle unbelegten, beweglichen Lagerplätze 20 als Zielstellen für die FTF 22 berücksichtigt, die im Wareneingang 26 (vergleiche Fig. 1) mit einzulagernden Lagergütern 70 beladen werden. Zu diesem Zweck holen die FTF 22 die Wareneingangs-Lagereinheiten 70 aus dem Wareneingang 26 ab. Die Übergabe der Wareneingangs-Lagereinheiten 70 an die (unbelegten) FTF 22 erfolgt wiederum vorzugsweise passiv, insbesondere durch bloßes Durchfahren der FTF 22, wie oben erläutert. Es versteht sich, dass der passive Austausch generell erfolgt, indem eine der beteiligten Komponenten (z.B. das FTF 22) bereits in der Austauschzone 18 auf die andere Komponente (z.B. den Regalboden 60) wartet und dann die kämmende Relativbewegung zwischen den Komponenten stattfindet.

In einem nächsten, obligatorischen, Schritt S16 des Verfahrens 10 werden basierend auf der Analyse S10, und ggf. basierend auf der Analyse des Schritts S12, Bewegungsbefehle für die beweglichen Lagerplätze 20 und die FTF 22 erzeugt. Dabei wird der zeitlicher Aspekt berücksichtigt, da die beweglichen Lagerplätze 20 genau zum richtigen Zeitpunkt in der Austauschzone 18 vorhanden sein müssen, nämlich dann, wenn sich das zugeordnete FTF 22 ebenfalls in der Austauschzone 18 befindet. Die beweglichen Lagerplätze 20 sollten also zu den FTF 22 "synchronisiert" werden und umgekehrt. All dies geschieht im Schritt S16.

In einem Schritt S18 werden die beweglichen Lagerplätze 20 und die FTF 22 gemäß ihren zugeordneten Bewegungsbefehlen (synchronisiert) in die Austauschzone 18 bewegt. In einem Schritt S20 werden die Lagereinheiten 70 zwischen den beweglichen Lagerplätzen 20 und den FTF 22 ausgetauscht. Die Lagereinheiten 70 werden also ein- und/oder ausgelagert.

In einem weiteren Schritt S22 werden die ausgetauschten Lagereinheiten 70 zu ihren Zielstellen bewegt. Eingelagerte Lagereinheiten 70 bewegen sich mit ihren Lagerplätzen 20 an vorgegebenen Zielpositionen. Der Lagerboden 60-1 der Fig. 5 kann z.B. in das oberste Regalfach des linken Regals 36-1 bewegt werden. Eine ausgelagerte Lagereinheit 70 kann beispielsweise zur unteren Arbeitsstation AS30 der Fig. 1 verbracht werden, die dann z.B. als Kommissionierplatz ausgebildet ist.

Danach endet das Verfahren 100.

### Bezugszeichenliste

- 10: Lager- und Kommissioniersystem
- 12: Regalanordnung
- 14: Fahrerloses Transportsystem (FTS)
- 16: Steuerung
- 18: Austauschzone
- 20: bewegliche Lagerplätze
- 22: Fahrerloses Transportfahrzeuge (FTF)
- 24: Bewegung von 20 oder 22
- 26: Wareneingang (WE)
- 28: Warenausgang (WA)
- 30: Arbeitsstation (AS)
- 32: Lager
- 34: Regalblock
- 36: Regal
- 38: vertikal umlaufendes Regal
- 40: horizontal umlaufendes Regal
- 42: Lagerlifte
- 44: Hubbalkeneinrichtung
- 50: Transportsystem
- 52: Stetigförderer
- 54: Fahrweg
- 56: Wegpunkt
- 58: Spur
- 60: Regalboden
- 62: Zugmittel
- 64: Drehachse
- 66: Drehbewegung
- 68: drahtlose Kommunikation
- 70: Lagereinheit
- 72: Regalanordnungsebenen
- 74: FTS-Ebene
- 76: Mast von 44
- 78: LAM von 44
- 80: Regalbau
- 82: Boden
- 84: Regalfach
- 100: Verfahren

## Patentansprüche

1. Lager- und Kommissioniersystem (10), insbesondere für Case-Pick-Anwendungen, zum vollautomatisierten Kommissionieren von Lagereinheiten (70), das aufweist:
eine Regalanordnung (12), die einen stationär angeordneten Regalblock (34) aufweist, wobei der Regalblock (34) mindestens ein Regal (36) mit einer Vielzahl von beweglichen Lagerplätzen (20) aufweist, wobei jeder der beweglichen Lagerplätze (20) zur Pufferung einer der Lagereinheiten (70) eingerichtet ist;
ein fahrerloses Transportsystem, FTS, (14) mit einer Vielzahl von fahrerlosen Transportfahrzeugen, FTF, (22), die autonom entlang von Fahrwegen (54) beweglich sind, wobei jedes der FTF (22) ein Lastaufnahmemittel, LAM, aufweist, wobei die LAM der FTF (22) und die beweglichen Lagerplätze (20) eingerichtet sind, die Lagereinheiten (70) untereinander auszutauschen;
eine Austauschzone (18), die überlappend zwischen der Regalanordnung (12) und dem FTS (14) angeordnet ist, so dass die beweglichen Lagerplätze (20) und die FTF (22) in die Austauschzone (18) hinein und aus der Austauschzone (18) heraus bewegbar sind; und
einer Steuerung (16), die eingerichtet ist, Bewegungen (24) der FTF (22) und der beweglichen Lagerplätze (20) so aufeinander abzustimmen, dass zu vorgegebenen Zeitpunkten vorgegebene Lagereinheiten (70) zwischen vorgegebenen FTF (22) und vorgegebenen beweglichen Lagerplätzen (20) austauschbar sind,
**dadurch gekennzeichnet, dass** jeder der beweglichen Lagerplätze (20) einen, vorzugsweise Zinken aufweisenden, Lagerplatz-Boden (82) aufweist und wobei jedes der FTF-LAM so ausgebildet ist, dass die Lagereinheiten (70) kämmend zwischen den Lagerplatz-Böden (82) und den FTF-LAM austauschbar sind, indem die FTF (22) die beweglichen Lagerplatz-Böden (82) innerhalb der Austauschzone (18) durchfahren.

2. Lager- und Kommissioniersystem (10) nach Anspruch 1, das mehrere der Regalblöcke (34) sowie mindestens eine Regalanordnungsebene (72) aufweist, wobei die Regalblöcke (34) einer gleichen Regalanordnungsebene (72) abstandsfrei zueinander angeordnet sind, wobei jede der Regalanordnungsebenen (72) an eine FTS-Ebene (74) angrenzt.

3. Lager- und Kommissioniersystem (10) nach einem der Ansprüche 1 oder 2, wobei die Regale (36) ein vertikal oder horizontal umlaufendes Regal (38, 40) umfassen.

4. Lager- und Kommissioniersystem (10) nach einem der Ansprüche 1 bis 2, wobei der Regalblock (34) einen Lagerlift (42) umfasst, der mindestens ein Regal (36) und eine Hubbalkeneinrichtung (44) umfasst, die dem mindestens einen Regal (36) zugeordnet ist, wobei ein LAM der Hubbalkeneinrichtung (44) eingerichtet ist, die beweglichen Lagerplätze (20) in das mindestens eine Regal (36) ein/auszulagern und ausgelagerte bewegliche Lagerplätze (20) in die Austauschzone (18) zu bewegen, um dort die Lagereinheiten (70) an die FTF (22) abzugeben oder von den FTF (22) aufzunehmen.

5. Lager- und Kommissioniersystem (10) nach einem der Ansprüche 3 oder 4, wobei das vertikal bzw. horizontal umlaufende Regal (38, 40) und/oder der Lagerlift (42) mehrere Regalböden (60) aufweisen, wobei jeder der Regalböden (60) jeweils eine Vielzahl der beweglichen Lagerplätze (20) umfasst, die vorzugsweise horizontal benachbart zueinander angeordnet und vorzugsweise starr miteinander verbunden sind.

6. Verfahren (100) zum Kommissionieren von Lagereinheiten (70) in einem Lager- und Kommissioniersystem (10), das eine Vielzahl von beweglichen Lagerplätzen (20) und eine Vielzahl von fahrerlosen Transportfahrzeugen, FTF, (22) aufweist, wobei die beweglichen Lagerplätze (20) und die FTF (22) eingerichtet sind, die Lagereinheiten (70) untereinander auszutauschen, wobei das System (10) nach einem der Ansprüche 1 bis 5 ausgebildet ist, wobei das Verfahren (100) die Schritte aufweist:
Analysieren (S10) von Kommissionieraufträgen;
Erzeugen (S16) von Bewegungsbefehlen für die beweglichen Lagerplätze (20) und für die FTF (22);
Bewegen (S18) der beweglichen Lagerplätze (20) und der FTF (22) gemäß den Bewegungsbefehlen in die Austauschzone (18) derart, dass zu vorgegebenen Zeitpunkten vorgegebene Lagereinheiten (70) zwischen vorgegebenen FTF (22) und vorgegebenen beweglichen Lagerplätzen (20) ausgetauscht werden (S20), indem die FTF (22) die beweglichen Lagerplatz-Böden (82) innerhalb der Austauschzone (18) durchfahren, wobei die Austauschzone (18) einen überlappenden Bereich zwischen einem Lager (32) und einem fahrerlosen Transportsystem, FTS, (14) darstellt; und
Bewegen (S22) der ausgetauschten Lagereinheiten (70) zu Zielstellen (AS, WA).

7. Verfahren (100) nach Anspruch 6, wobei das Analysieren (S10) der Kommissionieraufträge batchorientiert erfolgt.

8. Verfahren (100) nach einem der Ansprüche 6 oder 7, das ferner aufweist:
Analysieren (S12) von Wareneingangsaufträgen;
Bestimmen von potenziellen Einlagerplätzen, die unbelegte bewegliche Lagerplätze (20) darstellen, wobei die Analyse (S12) der Wareneingangsaufträge vorzugsweise kennzahlenorientiert erfolgt;
Erzeugen (S16) von entsprechenden Bewegungsbefehlen für die unbelegten beweglichen Lagerplätze (20) und die FTF (22); und
Abholen von Wareneingangs-Lagereinheiten (20) durch die FTF (22).

## Claims

1. A storage and picking system (10), in particular for case-picking applications, for picking storage units (70) in a fully automated manner, comprising:
a rack arrangement (12) comprising a rack block (34) arranged stationary, wherein the rack block (34) comprises at least one rack (36) having a plurality of movable storage locations (20), wherein each of the movable storage locations (20) is configured for buffering one of the storage units (70);
a driverless transport system, DTS, (14) having a plurality of driverless transport vehicles, DTV, (22) movable autonomously along traveling paths (54), wherein each of the DTV (22) comprises a load handling device, LHD, wherein the LHD of the DTV (22) and the movable storage locations (20) are configured to exchange the storage units (70) between each other;
an exchange zone (18) arranged overlappingly between the rack arrangement (12) and the DTS (14) so that the movable storage locations (20) and the DTV (22) are movable into the exchange zone (18) and from the exchange zone (18); and
a control (16) configured to adjust movements (24) of the DTV (22) and the movable storage locations (20) to each other so that, at predetermined points in time, predetermined storage units (70) are exchangeable between predetermined DTV (22) and predetermined movable storage locations (20),
**characterized in that** each of the movable storage locations (20) comprises a storage-location base (82), which preferably comprises prongs, and wherein each of the DTV-LHD is formed such that the storage units (70) are exchangeable between the storage-location bases (82) and the DTV-LHD in a meshing manner by travelling the DTV (22) through the movable storage-location bases (82) within the exchange zone (18).

2. The storage and picking system (10) of claim 1 comprising several ones of the rack blocks (34) as well as at least one rack-arrangement plane (72), wherein the rack blocks (34) of an identical rack-arrangement plane (72) are arranged without a distance relative to each other, wherein each of the rack-arrangement planes (72) is contiguous to a DTS plane (74).

3. The storage and picking system (10) of any of claims 1 or 2, wherein the racks (36) include a rack (38, 40) which circulates vertically or horizontally.

4. The storage and picking system (10) of any of claims 1 to 2, wherein the rack block (34) includes a storage elevator (42), which includes at least one rack (36) and an elevating-beam device (44) associated with the at least one rack (36), wherein a LHD of the elevating-beam device (44) is configured to store/retrieve the movable storage locations (20) into/from the at least one rack (36) and move retrieved movable storage locations (20) into the exchange zone (18) for delivering the storage units (70) to the DTV (22) or receiving them from the DTV (22) there.

5. The storage and picking system (10) of any of claims 3 or 4, wherein the rack (38, 40), which circulates vertically or horizontally, and/or the storage elevator (42) comprise several rack shelves (60), wherein each of the rack shelves (60) respectively includes a plurality of the movable storage locations (20), which preferably are arranged horizontally adjacent to each other and which are preferably connected rigidly to each other.

6. A method (100) for picking storage units (70) in a storage and picking system (10) comprising a plurality of movable storage locations (20) and a plurality of driverless transport vehicles, DTV, (22), wherein the movable storage locations (20) and the DTV (22) are configured to exchange the storage locations (70) between each other, wherein the system (10) is formed in accordance with any of the claims 1 to 5, wherein the method (100) comprises the steps of:
analyzing (S10) picking orders;
generating (S16) moving commands for the movable storage locations (20) and the DTV (22);
moving (S18) the movable storage locations (20) and the DTV (22) in accordance with the moving commands into the exchange zone (18) such that, at predetermined points in time, predetermined storage locations (70) are exchanged between predetermined DTV (22) and predetermined movable storage locations (20) (S20) by travelling the DTV (22) through the movable storage-location bases (82) within the exchange zone (18), wherein the exchange zone (18) represents an region overlapping between a warehouse (32) and a driverless transport system, DTS (14); and
moving (S22) the exchanged storage units (70) to target locations (AS, WA).

7. The method (100) of claim 6, wherein the analyzing (S10) of the picking orders is conducted in a batch-oriented manner.

8. The method (100) of any of claims 6 or 7 further comprising:
analyzing (S12) goods-receipt orders;
determining potential storage locations, which represent unoccupied movable storage locations (20), wherein the analysis (S12) of the goods-receipt orders is conducted preferably in an index-number oriented manner;
generating (S16) corresponding moving commands for the unoccupied moving storing locations (20) and the DTV (22); and
retrieving goods-receipt storage units (20) by means of the DTV (22).

## Revendications

1. Système de stockage et de préparation de commandes (10), notamment pour des applications de prélèvement en casier, pour la préparation de commandes entièrement automatisée d'unités de stockage (70), qui comprend :
un arrangement de rayonnages (12), qui possède un bloc de rayonnage (34) monté en position fixe, le bloc de rayonnage (34) possédant au moins un rayonnage (36) doté d'une pluralité d'emplacements de stockage (20) mobiles, chacun des emplacements de stockage (20) mobiles étant conçu pour le stockage temporaire de l'une des unités de stockage (70) ;
un système de transport sans conducteur, FTS, (14) comprenant une pluralité de véhicules de transport sans conducteur, FTF, (22) qui peuvent se déplacer de manière autonome le long de trajets de déplacement (54), chacun des FTF (22) possédant un dispositif de levage de charge, LAM, les LAM des FTF (22) et les emplacements de stockage (20) mobiles étant conçus pour échanger les unités de stockage (70) entre eux ;
une zone d'échange (18), qui est disposée en chevauchement entre l'arrangement de rayonnages (12) et le FTS (14), de sorte que les emplacements de stockage (20) mobiles et les FTF (22) peuvent se déplacer vers l'intérieur de la zone d'échange (18) et hors de la zone d'échange (18) ; et
une commande (16), qui est conçue pour accorder les mouvements (24) des FTF (22) et des emplacements de stockage (20) mobiles les uns sur les autres de telle sorte que des unités de stockage (70) prédéfinies peuvent être échangées à des instants prédéfinis entre des FTF (22) prédéfinis et des emplacements de stockage (20) mobiles prédéfinis,
**caractérisé en ce que**
chacun des emplacements de stockage (20) mobiles possède un fond d'emplacement de stockage (82), lequel possède de préférence des dents, et chacun des LAM de FTF étant configuré de telle sorte que les unités de stockage (70) peuvent être échangées avec engrènement entre les fonds (82) d'emplacement de stockage et les LAM de FTF **en ce que** les FTF (22) font traverser l'intérieur de la zone d'échange (18) aux fonds d'emplacement de stockage (82) mobiles.

2. Système de stockage et de préparation de commandes (10) selon la revendication 1, lequel possède plusieurs des blocs de rayonnage (34) ainsi qu'au moins un plan d'arrangement de rayonnage (72), les blocs de rayonnage (34) d'un même plan d'arrangement de rayonnage (72) étant disposés sans écart entre eux, chacun des plans d'arrangement de rayonnage (72) étant adjacent à un plan de FTS (74).

3. Système de stockage et de préparation de commandes (10) selon l'une des revendications 1 ou 2, les rayonnages (36) comprenant un rayonnage (38, 40) périphérique vertical ou horizontal.

4. Système de stockage et de préparation de commandes (10) selon l'une des revendications 1 et 2, le bloc de rayonnage (34) comportant un élévateur de stockage (42), lequel comporte au moins un rayonnage (36) et un dispositif à poutre de levage (44), qui est associé à l'au moins un rayonnage (36), un LAM du dispositif à poutre de levage (44) étant conçu pour entreposer/soutirer les emplacements de stockage (20) mobiles dans/de l'au moins un rayonnage (36) et déplacer les emplacements de stockage (20) mobiles dans la zone d'échange (18) afin d'y remettre les unités de stockage (70) aux FTF (22) ou à les y retirer des FTF (22).

5. Système de stockage et de préparation de commandes (10) selon l'une des revendications 3 ou 4, le rayonnage (38, 40) périphérique vertical ou horizontal et/ou l'élévateur de stockage (42) possédant plusieurs fonds de rayonnage (60), chacun des fonds de rayonnage (60) comportant respectivement une pluralité des emplacements de stockage (20) mobiles, lesquels sont de préférence disposés horizontalement de manière adjacente les uns aux autres et sont de préférence reliés de manière rigide les uns avec les autres.

6. Procédé (100) de préparation de commande d'unités de stockage (70) dans un système de stockage et de préparation de commandes (10), qui possède une pluralité d'emplacements de stockage (20) mobiles et une pluralité de véhicules de transport sans conducteur, FTF, (22), les emplacements de stockage (20) mobiles et les FTF (22) étant conçus pour échanger les unités de stockage (70) entre eux, le système (10) étant configuré selon l'une des revendications 1 à 5, le procédé (100) comprenant les étapes suivantes :
analyse (S10) d'ordres de préparation de commande ;
génération (S16) d'instructions de mouvement pour les emplacements de stockage (20) mobiles et pour les FTF (22) ;
déplacement (S18) des emplacements de stockage (20) mobiles et des FTF (22) conformément aux instructions de déplacement dans la zone d'échange (18) de telle sorte que des unités de stockage (70) prédéfinies sont échangées (S20) à des instants prédéfinis entre des FTF (22) prédéfinis et des emplacements de stockage (20) mobiles prédéfinis, en ce que les FTF (22) font traverser l'intérieur de la zone d'échange (18) aux fonds d'emplacement de stockage (82) mobiles, la zone d'échange (18) représentant une zone de chevauchement entre un stock (32) et un système de transport sans conducteur, FTS, (14) ; et
déplacement (S22) des unités de stockage (70) échangées vers des points de destination (AS, WA).

7. Procédé (100) selon la revendication 6, l'analyse (S10) des ordres de préparation de commande s'effectuant par lot.

8. Procédé (100) selon l'une des revendications 6 et 7, comprenant en outre :
l'analyse (S12) d'ordres de réception de marchandises ;
la détermination d'emplacements d'entrée en stock potentiels, qui représentent des emplacements de stockage (20) mobiles non occupés, l'analyse (S12) des ordres de réception de marchandises s'effectuant de préférence en fonction d'un indice ;
la génération (S16) d'instructions de mouvement correspondantes pour les emplacements de stockage (20) mobiles non occupés et les FTF (22) ; et le ramassage des unités de stockage de réception de marchandises (20) par les FTF (22).
